# EUROPÄISCHE PATENTSCHRIFT

(11) **EP 2 992 214 B1**
(45) Veröffentlichungstag und Bekanntmachung des Hinweises auf die Patenterteilung: **22.11.2017**
(21) Anmeldenummer: 14725001.3
(22) Anmeldetag: 24.04.2014
(51) Int. Cl.: F04D 13/02, F16D 1/08, F04D 29/20

(54) **PUMPENWELLE**
PUMP SHAFT
ARBRE DE POMPE

(30) Priorität: 03.05.2013 DE 102013007767
(43) Veröffentlichungstag der Anmeldung: 09.03.2016
(73) Patentinhaber: GEA Tuchenhagen GmbH, 21514 Büchen (DE)
(72) Erfinder: BECKER, Kai, 21035 Hamburg (DE); PAWLIK, Markus, 21514 Büchen (DE)
(74) Vertreter: Hauck Patentanwaltspartnerschaft mbB
(86) Internationale Anmeldenummer: PCT/EP2014/001097
(87) Internationale Veröffentlichungsnummer: WO 2014/177257

(56) Entgegenhaltungen:
- DE-A1- 1 450 122
- DE-A1- 10 315 685
- US-A- 5 851 084

## Beschreibung

Die Erfindung betrifft eine Pumpenwelle nach dem Oberbegriff des Anspruchs 1.

Im Stand der Technik sind Pumpenwellen der gattungsgemäßen Art bekannt geworden, insbesondere für die Anwendung in Kreiselpumpen. Die DE 103 15 685 B4 schlägt eine Klemmverbindung für eine fliegend gelagerte Pumpenwelle vor, wobei die Pumpenwelle einen topfförmigen Abschnitt mit einem elastisch verformbaren Bereich besitzt. In dem elastisch verformbaren Bereich wird eine Motorwelle aufgenommen und durch die Verformung eine kraftschlüssige Verbindung von Pumpenwelle und Motorwelle geschaffen. Die Motorwelle wird in einer Aufnahmebohrung eines nicht verformbaren Bereichs des topfförmigen Abschnitts der Pumpenwelle geführt. Die Lehre der DE 103 15 685 B4 sieht vor, eine Trennung der Funktionen vorzunehmen, d.h. die Führung wird von einem Bereich bewirkt, dessen Wirkung von dem Bereich entkoppelt ist, mit welchem die kraftschlüssige Verbindung bewirkt wird. Erreicht wird diese Trennung durch Schlitze, die in Umfangsrichtung im topfförmigen Abschnitt eingebracht sind. Längsschlitze, die zwischen den in Umfangsrichtung vorgesehenen Schlitzen und dem freien Ende des topfförmigen Abschnitts vorgesehen sind, schaffen die elastische Verformbarkeit, die den Kraftschluss ermöglicht.

Gemäß der Lehre der DE 103 15 685 ergibt sich eine zuverlässige Klemmung, wenn die die Verformung erzeugenden Verbindungsmittel, im Beispiel Schrauben, nahe dem freien Ende des elastisch verformbaren Bereichs angeordnet sind. Die Verformung wird auf diese Weise in großem Abstand zum nicht verformbaren Bereich ausgeführt, wodurch die gewünschte vorteilhafte Trennung der Funktionen verbessert wird. Die Verformung wird zudem wesentlich erleichtert, da die Krafteinleitung durch die Verbindungsmittel weit vom festen Ende des verformbaren Bereichs entfernt erfolgt. In einer Weiterbildung wird sogar gefordert, dass die axiale Länge des verformbaren Bereichs das Dreifache bis Fünffache der axialen Länge des nicht verformbaren Bereichs beträgt.

Eine weitere Forderung gemäß Lehre ist, Verbindungsmittel, den verformbaren und den nicht verformbaren Bereich frei von Unwucht zu gestalten. Ziel ist es, eine möglichst unwuchtfreie Rotation zu schaffen.

In der Praxis wird beobachtet, dass in einigen Fällen die unwuchtfreie Rotation selbst bei hochgenauer Fertigung der Pumpenwelle, insbesondere des topfförmigen Abschnitts, und der Verbindungsmittel nicht erreicht wird. Die in diesen Fällen vorhandene Unwucht führt zu einer unerwünschten Geräuschentwicklung und belastet zudem die weiteren Bauteile der Pumpe, beispielsweise der Lager der Motorwelle oder einer mit der Pumpenwelle zusammenwirkenden Dichtung. Im ungünstigen Fall wird die Lebensdauer der Pumpe reduziert.

Die DE 14 50 122 A stellt eine Hülse vor, welche mit einem Zahnrad verwendet wird. Diese Hülse besitzt an ihrem einen Ende einen ersten Führungsabschnitt und einen Klemmabschnitt. Sie kann einen zweiten Führungsabschnitt am entgegengesetzten Ende der Hülse besitzen. Klemmabschnitte und Führungsabschnitte dienen der Aufnahme einer Welle.

Die US-A 5 851 084 zeigt eine Hülse mit zwei geschlitzten Ringabschnitten. In einem der Ringabschnitte ist eine Spannschraube vorgesehen, die einen der Schlitze überbrückt. Die Schlitze sind so ausgeführt, dass durch Anziehen der Spannschraube der eine Ringabschnitt zur Klemmung auf einer Welle zusammengezogen wird, während der andere Ringabschnitt gedehnt wird. Durch diese Dehnung kann der Ringabschnitt in einer Bohrung geklemmt werden.

Es ist daher Aufgabe der Erfindung, die Gestaltung der Pumpenwelle so zu verbessern, dass eine Rotation frei von Unwucht zuverlässig erreicht wird.

Diese Aufgabe wird gelöst durch eine Pumpenwelle mit den Merkmalen des ersten Anspruchs. Die abhängigen Ansprüche geben vorteilhafte Ausgestaltungen der Erfindung an.

Die Erfinder erkannten, dass die Unwucht nicht alleine von der geometrischen Gestaltung der Pumpenwelle abhängt sondern auch von der Genauigkeit der Montage der Verbindungsmittel. Leichte Ungleichmäßigkeiten führen zu einer Auslenkung der Motorwelle innerhalb des zylindrischen Hohlraums, so dass die Drehachsen von Motorwelle und Pumpenwelle leicht gegeneinander gekippt sind.

Daher schlagen die Erfinder eine Pumpenwelle vor, welche einen mit einem Laufrad einer Kreiselpumpe verbindbaren ersten Abschnitt, einen zum Zusammenwirken mit einer Dichtung ausgelegten, insbesondere zur Aufnahme eines Dichtringes einer Gleitringdichtung geeigneten, zweiten Abschnitt und einen Verbindungsabschnitt aufweist, wobei der Verbindungsabschnitt einen mit einer Stirnfläche versehenen zylindrischen Hohlraum, in welchem eine Motorwelle aufnehmbar ist, umfasst, und der Verbindungsabschnitt wenigstens zwei sich vorwiegend in einer axialen Richtung, also längs der axialen Richtung orientierte, und wenigstens zwei sich vorwiegend in einer Umfangsrichtung, also quer zur axialen Richtung orientierte, erstreckenden, teilumfänglichen Schlitze aufweist und der Verbindungsabschnitt durch die sich in Umfangsrichtung erstreckenden Schlitze in einen Führungsabschnitt und zur Herstellung einer kraftschlüssigen Verbindung mit der Motorwelle einen durch ein Spannmittel in Umfangsrichtung und radialer Richtung elastisch verformbaren Klemmabschnitt unterteilt wird, wobei der Verbindungsabschnitt einen auf der in einer axialen Richtung dem Führungsabschnitt abgewandten Seite des Klemmabschnittes angeordneten zweiten Führungsabschnitt aufweist und zwischen zweitem Führungsabschnitt und Klemmabschnitt wenigstens zwei sich vorwiegend in Umfangsrichtung, teilumfängliche Schlitze vorgesehen sind. Vorwiegend erstreckend bedeutet, dass die Vektorkomponente in die genannte Richtung größer als die Vektorkomponente oder die Vektorkomponenten in die zu der genannten Richtung senkrechten Richtung oder senkrechten Richtungen ist. Vorwiegend axial umfasst daher auch Ausrichtungen des Schlitzes, die gegen die durch die Wellenachse definierte axiale Richtung geneigt sind. Ein sich vorwiegend in Umfangsrichtung erstreckender Schlitz steht in einem Winkel von weniger als 45 Grad zur Umfangsrichtung, ein sich vorwiegend in axialer Richtung erstreckender Schlitz in einem Winkel von weniger als 45 Grad zur axialen Richtung. Vorteilhaft in Bezug auf die Symmetrie und damit die Unwucht kann wenigstens einer dieser Winkel, vorzugsweise alle diese Winkel, weniger als 5 Grad betragen.

Ein zweiter Führungsabschnitt, der mit dem ersten zusammenwirkt, verbessert die Orientierung der Motorwelle im Hohlraum. Der zweite Führungsabschnitt ist ringförmig geformt mit einer zylindrischen Innenfläche, mit welcher die Motorwelle führbar ist. Diese Orientierung ist gut, unabhängig davon, wie das Spannmittel montiert wird. Selbst wenn dieses bezogen auf die Wellenachse unsymmetrisch gespannt wird, also Kräfte unsymmetrisch in den Klemmabschnitt eingeleitet werden, bleibt die Orientierung erhalten.

Diese Gestaltung reduziert durch flächenhafte Klemmung im Klemmabschnitt und verbesserte Führung in Führungsabschnitt und mit diesem zusammenwirkenden zweiten Führungsabschnitt die maximal mögliche Unwucht erheblich. Eine Verringerung der Lebensdauer der Pumpe, beispielsweise durch Verschleiß der Dichtung aufgrund der Unwucht, wird vermieden.

Es wurde festgestellt, dass die Flächenklemmung und die Führung in einer Weiterbildung nochmals verbessert sind, wenn der Klemmabschnitt und einer der Führungsabschnitte zusammen nicht länger als die halbe axiale Länge des Verbindungsabschnitts sind. Dies kann umgesetzt sein, indem sich zweiter Führungsabschnitt und Klemmabschnitt zusammen über weniger als eine halbe axiale Länge des Verbindungsabschnitts erstrecken. Alternativ kann es umgesetzt sein, indem sich Führungsabschnitt und Klemmabschnitt zusammen über weniger als eine halbe axiale Länge des Verbindungsabschnitts erstrecken.

Dies erreicht die vorgenannten Vorteile in einer raumsparenden und hinsichtlich Materialverbrauchs kostengünstigen Bauweise.

Eine weitere Verbesserung der Klemmung wird durch Nuten erreicht, die sich über die volle axiale Länge des Klemmabschnitts erstrecken, da die Steifigkeit des Klemmabschnitts gezielt reduziert und dadurch die Verformbarkeit und die erreichbare Verformung verbessert werden.

Vorteilhaft liegen diese Nuten in radialer Richtung außen am Klemmabschnitt, da dies kostengünstig herstellbar ist und keine Auswirkung auf die Führungsabschnitte bei der Krafteinleitung mittels des Spanmittels hat.

In einer Weiterbildung umfasst die Pumpenwelle ein erstes Bauteil, in welchem der zweite Abschnitt angeordnet ist, und ein zweites Bauteil, in welchem der Verbindungsabschnitt angeordnet ist. Erstes und zweites Bauteil sind stoffschlüssig miteinander verbunden, wodurch aufgrund der freien Materialwahl und des geringen Materialverbrauchs eine kostengünstige Herstellung ermöglicht wird.

Gemäß einer anderen Weiterbildung ist das Spannmittel auf halber axialer Länge des Klemmabschnitts angeordnet. Hierdurch wird die flächenhafte Klemmwirkung nochmals verbessert.

Nach einer anderen Weiterbildung umfasst das Spannmittel wenigstens zwei Schrauben, von denen jeweils eine über ihre Schraubenlänge den Klemmabschnitt beidseits eines der axialen Schlitze durchsetzt. Hierdurch werden Klemmkräfte symmetrisch eingeleitet und ein auf die Unwucht bezogen günstiges Spannmittel geschaffen.

Eine andere Weiterbildung sieht vor, dass die Ausdehnung des Klemmabschnitts in axialer Richtung weniger als ein Drittel der axialen Ausdehnung des Verbindungsabschnitts beträgt. Das Verhältnis aus Klemmung und Führung der Motorwelle ist so besonders günstig.

Nach einer anderen Weiterbildung sind Verbindungsabschnitt und Spannmittel unwuchtfrei ausgeführt. Das Ziel der im Rahmen der Fertigungsmöglichkeiten und Fertigungstoleranzen machbaren Freiheit von Unwucht bei Rotation um die Längsachse der Pumpenwelle wird auf diese Weise besonders kostengünstig erreicht, da die präzise Gestaltung der Pumpenwelle auf wichtige Teile reduziert wird.

Vorteilhaft ist es, die Pumpenwelle derart weiterzubilden, dass der Verbindungsabschnitt und das Spannmittel bezogen auf eine Mittelachse der Pumpenwelle drehsymmetrisch ausgeführt sind. Dies kann eine zwei-, drei- oder mehrzählige Drehsymmetrie sein.

Eine weitere Weiterbildung sieht vor, dass die axialen Schlitze die sich in Umfangsrichtung erstreckenden Schlitze auf weniger als der Hälfte der Erstreckung in Umfangsrichtung schneiden. Dies erlaubt es, fehlende Symmetrie des Spannmittels in Umfangsrichtung durch Versatz der Schlitze auszugleichen. Ist das Spannmittel beispielsweise als Schraube ausgeführt, ergibt sich eine unterschiedliche Steifigkeit der Klemmabschnitts beidseits des axialen Schlitzes, da auf einer Seite eine Gewindebohrung, auf der anderen Seite eine Durchgangsbohrung und vorteilhaft eine Ausnehmung für den Schraubenkopf vorgesehen sind.

Vorteilhaft ist es, in einer Kreiselpumpe mit einem Motor, welcher eine Motorwelle umfasst, mit einem in einem Pumpengehäuse angeordneten Laufrad und einer zwischen Laufrad und Motor im Pumpengehäuse angeordneten Gleitringdichtung, wobei das Pumpengehäuse mit dem Motor verbunden ist, die Pumpenwelle mit vorbeschrieben Merkmalen zu gestalten.

Anhand eines Ausführungsbeispiels soll die Erfindung und ihre Weiterbildungen und Vorteile näher erläutert werden. Es zeigen:
- Fig. 1:: Teilschnitt längs durch eine Pumpe mit Pumpenwelle in schematischer Darstellung;
- Fig. 2:: Seitlicher Draufblick auf eine Pumpenwelle;
- Fig. 3:: Längsschnitt durch eine Pumpenwelle in einer zum Draufblick in Fig. 2 um 90° um die Wellenachse verdrehten Stellung;
- Fig. 4:: Schnitt quer zur Längsachse durch eine Pumpenwelle entlang der Linie A-A;
- Fig. 5:: Schnitt quer zur Längsachse durch eine Pumpenwelle entlang der Linie B-B;
- Fig. 6:: Schnitt quer zur Längsachse durch eine Pumpenwelle entlang der Linie B-B gemäß einer Weiterbildung.

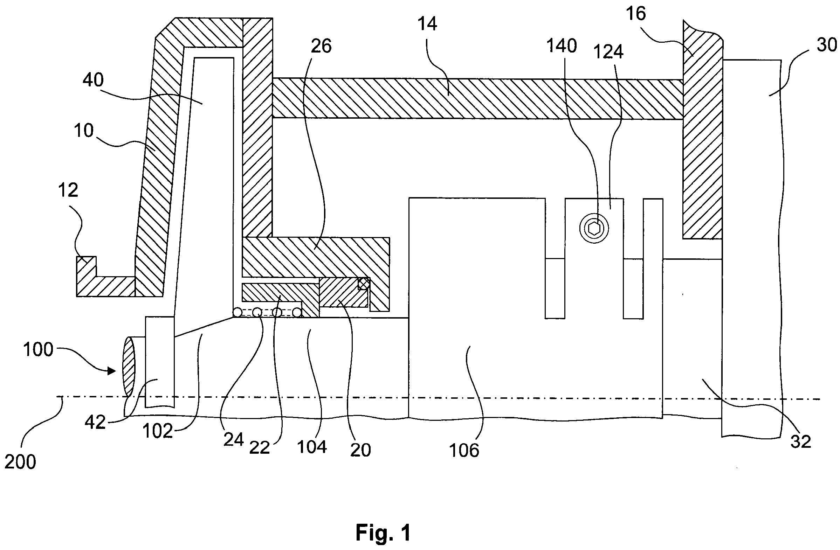

Eine Kreiselpumpe mit einer Pumpenwelle gemäß Ausführungsbeispiel ist in Fig. 1 in einem Teilschnitt dargestellt. Das Gehäuse 10 der Kreiselpumpe ist mit einem Ansaugeinlass 12 versehen. Das Gehäuse 10 kann sich mittelbar oder unmittelbar auf einem Motorflansch 16 eines Motors 30 abstützend gestaltet sein. Im gezeigten Beispiel stützt sich das Gehäuse 10 mittelbar über eine Traganordnung 14 auf dem Motorflansch 16 des Motors 30 ab.

Innerhalb des Gehäuses 10 befindet sich ein Laufrad 40, welches auf einer Pumpenwelle 100 befestigt und zusammen mit diesem um eine Wellenachse 200 drehbar ist. Das Gehäuse 10 weist zudem eine Dichtungsaufnahme 26 auf, in welcher eine Dichtung aufgenommen ist, die den Spalt zwischen Pumpenwelle 100 und Gehäuse 10 abdichtet und so den Innenraum des Gehäuses 10 von der Umgebung trennt. Die Dichtung ist vorteilhaft als Gleitringdichtung gestaltet, welche einen stationären Gleitring 20 umfasst. Der stationäre Gleitring 20 ist ortsfest in der Dichtungsaufnahme 26 angeordnet.

Der stationäre Gleitring 20 wirkt dichtend mit dem rotierenden Gleitring 22 zusammen, welcher auf der Pumpenwelle 100 mit dieser mitrotierend angeordnet ist. Das Mitrotieren kann mit wenigstens einem Mitnehmer bewirkt werden. Sind mehrere Mitnehmer vorhanden, stellt wenigstens einer von ihnen eine formschlüssige Verbindung des rotierenden Gleitrings 22 mit Laufrad 40 oder Pumpenwelle 100 her. Eine Federelement, beispielsweise eine Feder 24, übt eine Kraft im Wesentlichen parallel zur Wellenachse 200 aus, die die Gleitringe 20 und 22 gegeneinander drückt.

Die Pumpenwelle 100 umfasst drei Abschnitte, welche entlang der Wellenachse 200 einander folgend angeordnet sind.

Der erste Abschnitt 102 ist so gestaltet, dass in ihm das Laufrad 40 mit der Pumpenwelle 100 verbindbar ist. Der erste Abschnitt 102 kann eine konische Fläche umfassend gestaltet sein, welche in Kontakt mit einer laufradseitigen konischen Fläche bringbar ist. Mittels eines Sicherungsmittels 42, beispielsweise einer mit einem pumpenwellenseitigen Gewinde 134 in Eingriff bringbaren Mutter, werden die konischen Flächen gegeneinander vorgespannt.

Der zweite Abschnitt 104 ist zum Zusammenwirken mit einer Dichtung ausgelegt und folgt dem ersten Abschnitt 102 auf dessen dem Sicherungsmittel 42 abgewandten Seite. Im gezeigten Beispiel ist die Dichtung eine Gleitringdichtung. Deren rotierender Gleitring 22 steht in Kontakt mit dem zweiten Abschnitt 104 der Pumpenwelle 100.

Als dritter Abschnitt ist der Verbindungabschnitt 106 auf der in Richtung der Wellenachse 200 dem ersten Abschnitt 102 gegenüberliegenden Seite des zweiten Abschnitts 104 vorgesehen. Der Verbindungsabschnitt 106 umschließt eine Motorwelle 32. Mittels eines Spannmittels 140 wird durch wenigstens teilweise, vorzugsweise elastische, Verformung des Verbindungsabschnitts 106 eine kraftschlüssige Verbindung von Verbindungsabschnitt 106 und Motorwelle 32 bewirkt.

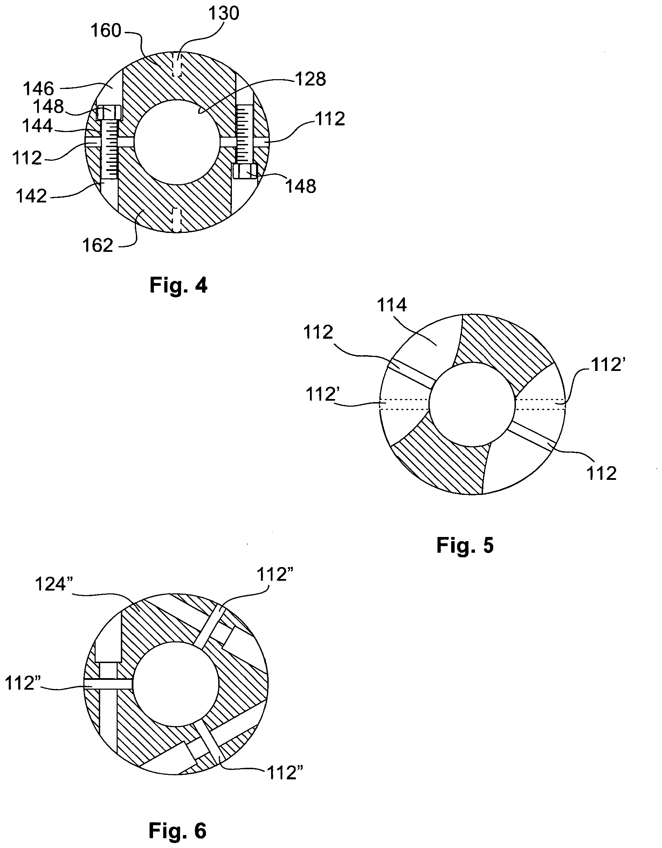

Das Spannmittel kann beispielsweise als ein auf den Klemmabschnitt 124 aufgeschrumpfter Ring gestaltet sein. Es können auch konische Flächen an einem Spannring und dem Klemmabschnitt zum Einsatz kommen. Eine besonders vorteilhafte Ausführung, die wiederholtes Montieren und Demontieren gestattet, wird anhand der Fig. 4 erläutert werden.

Im dargestellten Beispiel stützen sich die Pumpenwelle 100 und damit das Laufrad 40 vollständig auf der Motorwelle 32 ab und sind auf diese Weise fliegend gelagert. Hiermit wird ein kostengünstiger Aufbau bei Verzicht auf verschleißanfälligen Bauteilen, beispielsweise Wälzlagern zur Lagerung der Pumpenwelle 100, erreicht. Stattdessen werden die Lager des Motors 30 ausgenutzt.

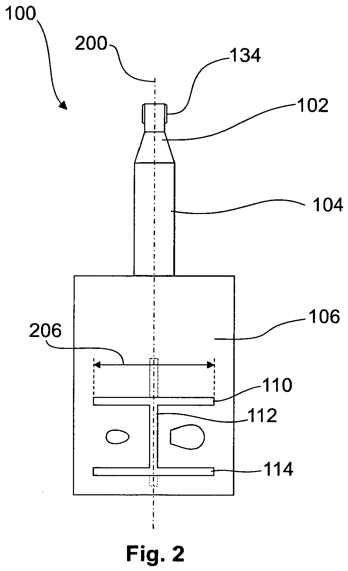

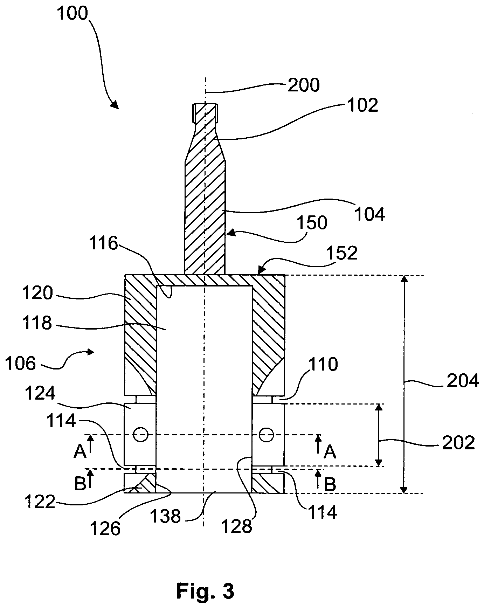

Die Pumpenwelle 100 ist in Fig. 2 in einer seitlichen Draufsicht gezeigt, in Fig. 3 ist sie entlang der Wellenachse geschnitten dargestellt. Der erste Abschnitt 102 umfasst einen konischen Teil und einen im Wesentlichen zylindrischen Teil mit Gewinde 134, mit welchem ein Sicherungsmittel 42 in Eingriff gebracht werden kann. Der sich an den konischen Teil auf der dem zylindrischen Teil abgewandten Seite anschließende zweite Abschnitt 104 besitzt eine weitgehend zylindrische Außenfläche. Es können umlaufende Nuten oder Absätze vorhanden sein, um das Zusammenwirken mit der Dichtung zu verbessern.

Der Verbindungsabschnitt 106 besitzt wenigstens zwei sich in Umfangsrichtung erstreckende Schlitze 110, von denen im Draufblick in Fig. 2 der eine zu sehen ist, der andere auf dem Betrachter gegenüberliegenden Seite des Verbindungsabschnittes 106 angeordnet ist. Die Schlitze 110 können gegen die zur Wellenachse senkrechte Richtung gekippt sein. Vorteilhaft ist es, die Schlitze 110 in einer gemeinsamen zur Wellenachse 200 senkrechten Ebenen anzuordnen. Die Pumpenwelle 100 gemäß Beispiel besitzt auf der im Draufblick sichtbaren Vorderseite und der Rückseite des Verbindungsabschnitts 106 jeweils ein Schlitz 112. Je ein Schlitz 112 schneidet einen der Schlitze 110. Vorzugsweise sind die Schlitze 112 parallel zur Wellenachse 200 und somit in axialer Richtung ausgerichtet. Sie können, um eine vorteilhafte Symmetrie zu erreichen, in einer gemeinsamen, die Wellenachse beinhaltenden Ebene liegen.

Aus Vorderseite und Rückseite des Verbindungsabschnitts 106 ist weiterhin je ein sich in Umfangsrichtung teilumfänglich erstreckender Schlitz 114 vorgesehen. Diese Schlitze können aus der zur Wellenachse senkrechten Richtung verkippt sein, liegen vorteilhaft jedoch in einer gemeinsamen Ebene. Beide Schlitze können vorteilhaft von je einem der Schlitze 112 geschnitten ausgeführt sein.

Die Schlitze durchsetzen, wie in Fig. 3 gezeigt, wenigstens über einen Teil ihrer Länge die zwischen einer äußeren Oberfläche und einem zylindrischen Hohlraum 118 im Inneren des Verbindungsabschnitts 106 befindliche Wand vollständig.

Der zylindrische Hohlraum 118 weist eine Stirnwand 116 auf, die den Hohlraum 118 auf der Seite begrenzt, auf der der zweite Abschnitt 104 an den Verbindungsabschnitt 106 angrenzt. Auf der der Stirnwand in axialer Richtung gegenüberliegenden Seite des Hohlraums befindet sich eine Öffnung 138. Die Stirnwand 116 bildet einen Anschlag für die durch die Öffnung in den Hohlraum einbringbare Motorwelle 32.

Die Schlitze 110 und 114 bewirken eine Unterteilung des Verbindungsabschnittes 106 der Pumpenwelle 100 in drei axial auf einander folgende Abschnitte. Die Schlitze 110 und 114 wirken als Trennschlitze zwischen den Abschnitten.

Ein Führungsabschnitt 120 ist zwischen der Stirnwand 116 und den Schlitzen 110 angeordnet. Die innere Oberfläche des Führungsabschnitts 120 ist als im Wesentlichen zylindrische Fläche ausgestaltet, wobei die Zylinderachse im Rahmen von Fertigungstoleranzen mit der Wellenachse 200 zusammenfällt. Insbesondere ist der Führungsabschnitt 120 geeignet gestaltet, die Motorwelle 32 entlang der Wellenachse 200 zu zentrieren.

Zwischen den Schlitzen 110 und 114 befindet sich ein Klemmabschnitt 124. Dieser besitzt eine vorzugweise zylindrisch ausgebildete Klemmfläche 128 auf der radial innenliegenden Oberfläche. Diese Klemmfläche 128 wird wenigstens abschnittsweise durch elastische Verformung des Klemmabschnitts in Berührung mit einem Teil der Oberfläche der Motorwelle 32 gebracht und so eine kraftschlüssige Verbindung von Pumpenwelle 100 und Motorwelle 32 bewirkt. Die elastische Verformung wird durch das in Fig. 1 gezeigte Spannmittel 140 erreicht. Die Schlitze 112 in axialer Richtung besitzen die Funktion von Dehnschlitzen und bewirken die Verformbarkeit des Klemmabschnitts 124. Bei Krafteinleitung durch das Spannmittel 140 in den Klemmabschnitt 124 geben die Schlitze 112 den notwendigen Raum und werden zusammengedrückt, bis der Kontakt zwischen Klemmfläche 128 und Motorwelle 32 hergestellt ist.

Auf der dem Klemmabschnitt abgewandten Seite der Schlitze 114 befindet sich der zweite Führungsabschnitt 122, der die Motorwelle 32 führend gestaltet ist. Dieser kann auf seiner Innenseite eine bevorzugt zylindrische Führungsfläche 126 aufweisen, die zur Zentrierung der Motorwelle 32 geeignet gestaltet ist. Der zweite Führungsabschnitt 122 ist fluchtend mit dem Führungsabschnitt 120 ausgeführt.

Bei Führungsabschnitte 120 und 122 bewirken zusammen, dass die durch die Öffnung 138 in den zylindrischen Hohlraum 118 eingebrachte Motorwelle 32 auf der Wellenachse 200 zentriert wird. Sie bewirken zusammen zusätzlich, dass die Motorwelle 32 nicht gegen die Wellenachse 200 verkippt werden kann. Eine solche Verkippung wäre beispielsweise durch ein unsymmetrisch auf den Klemmabschnitt einwirkendes Spannmittel denkbar. Da die Führungsabschnitte 120 und 122 beidseits des Klemmabschnitts 124 angeordnet sind, wird die Verkippung optimal begrenzt. Durch diese verbesserte Ausrichtung von Motorwelle 32 und Pumpenwelle 110 zueinander wird eine Unwucht im Betrieb der Kreiselpumpe im Rahmen der Fertigungstoleranzen weitestgehend ausgeschlossen. Da der Klemmabschnitt 106 zwischen den nicht verformbaren Führungsabschnitten 120 und 122 angeordnet ist, ist die Krafteinleitung in den Klemmabschnitt 106 und von diesem in die Motorwelle 32 hochsymmetrisch und gegenüber der DE 103 15 685 erheblich verbessert. Dieses trägt zum Verhindern von Unwucht im Pumpenbetrieb bei.

Das Spannmittel 140 ist nach einer Weiterbildung vorzugweise auf halber axialer Länge 202 des Klemmabschnitts 124 angeordnet. Dies erhöht die Symmetrie der Krafteinleitung zusätzlich und verringert so zusätzlich die Gefahr von Unwucht.

Der Verbindungsabschnitt 106 erstreckt sich, wie in Fig. 3 gezeigt, über ein axiale Länge 204. Eine vorteilhafte Weiterbildung des Ausführungsbeispiels ist es, wenn Führungsabschnitt 120 zusammen mit dem Klemmabschnitt 124 oder zweiter Führungsabschnitt 122 zusammen mit dem Klemmabschnitt 124 sich gemeinsam über weniger als die Hälfte der Länge 204 des Verbindungsabschnitts 106 erstrecken. Dies gewährleistet sowohl während der Montage der Pumpenwelle 100 auf der Motorwelle 32 als auch im montierten Zustand eine möglichst zentrische Ausrichtung beider Wellen 100 und 32 zueinander und erhöht die Gleichmäßigkeit der Klemmwirkung. Der zweite Führungsabschnitt 122 kann, wie in der Fig. 3 ebenfalls dargestellt, ringförmig gestaltet sein. Dies bedeutet eine gegenüber zur Länge 202 des Klemmabschnitts 124 kürzere axiale Ausdehnung.

Die Gleichmäßigkeit der Klemmwirkung des Klemmabschnitts 124 kann weiter verbessert werden, indem die axiale Ausdehnung 202 des Klemmabschnitts 124 weniger als ein Drittel der axialen Ausdehnung 204 des Verbindungsabschnitts 106 beträgt.

Gemäß einer aus Fig. 3 ersichtlichen Weiterbildung sind erster Abschnitt 102 und zweiter Abschnitt 104 der Pumpenwelle 100 Teile eines ersten Bauteils 150. Dieses ist stoffschlüssig mit einem zweiten Bauteil 152 verbunden, welches den Verbindungsabschnitt 106 beinhaltet. Dies ermöglicht eine kostengünstige Herstellung der Pumpenwelle 100, da die Materialien der Bauteile 150 und 152 dem Zweck angemessen gewählt und Materialausschuss in der Bearbeitung, beispielsweise beim Drehen, verringert wird.

Der Verbindungsabschnitt 106 kann einen größeren Außendurchmesser als die beiden Abschnitte 102 und 104 aufweisen. Hiermit kann der Materialbedarf für die Pumpenwelle 100 optimiert werden, da der Verbindungsabschnitt 106 einen zur Aufnahme der Motorwelle 32 hinreichend großen Durchmesser besitzen muss, die Abschnitte 102 und 104 jedoch einen kleinen Durchmesser besitzen können.

Im Verbindungsabschnitt 106 kann der Klemmabschnitt 124 einen gegenüber Führungsabschnitt 120 und zweitem Führungsabschnitt 122 erweiterten Durchmesser aufweisen, um dem Spannmittel 140 genügend Raum geben zu können und gleichzeitig den Raum- und/oder Materialbedarf für die Abschnitte 120 und 122 gering halten zu können.

Schnitte senkrecht zur Wellenachse 200 sind in den Fig. 4 bis Fig. 6 gezeigt.

Der Schnitt entlang der Linie A-A aus Fig. 3 liegt auf Höhe des Klemmabschnitts 124. Die beiden sich am Umfang gegenüberliegenden axialen Schlitze 112 teilen den Klemmabschnitt in erstes und zweites Klemmabschnittsteil 160 und 162. Die Teile sind durch die Schlitze voneinander beabstandet. Das Spannmittel ist gemäß Beispiel mit Schrauben 148 ausgeführt. Diese durchsetzen eine im ersten Klemmabschnittsteil 160 vorgesehene Durchgangsbohrung 144, der Kopf der Schraube wird in einer Aufnahmebohrung 146 derart aufgenommen, dass Kraft in das zugehörige Klemmabschnittsteil 160 und 162 eingeleitet werden kann. Das Gewinde der Schraube 148 greift in eine Gewindebohrung 142, welches im zweiten Klemmabschnittsteil 162 vorgesehen ist. Durch Gewindebohrung 142 und Aufnahmebohrung 146 kann mittels Schraube 148 eine Kraft derart eingeleitet werden, dass die Teile 160 und 162 in elastischer Verformung des Klemmabschnitts 106 aufeinander zu bewegt werden. Hierdurch wird die Klemmfläche 128 in Kontakt mit der Motorwelle 32 gebracht und die Verbindung von Pumpenwelle 100 und Motorwelle 32 bewirkt. Der Einfluss von Spannmittel 140 und Verbindungsabschnitt 106 auf die Unwucht können minimiert werden, indem sie unwuchtfrei ausgeführt werden. Dies kann mittels einer drehsymmetrischen Ausführung erreicht werden, bei der Verbindungsabschnitt und Spannmittel durch Drehung um die Wellenachse 200 in sich selbst überführbar ist. In Fig. 4 ist eine zweizählige Drehsymmetrie dargestellt, die vorteilhaft kostengünstig herstellbar ist. Das Beispiel einer dreizähligen Symmetrie zeigt Fig. 6, die in Bezug auf die Verteilung der Klemmkräfte vorteilhaft. Bei der dreizähligen Symmetrie wird der Klemmabschnitt 124" durch drei axiale Schlitze 112" unterteilt. Mehrzählige Drehsymmetrien sind entsprechend herstellbar.

Der Klemmabschnitt 124 kann wenigstens zwei sich in der durch die Wellenachse 200 definierten axialen Richtung über die volle axiale Länge 202 des Klemmabschnitts 124 erstreckende Nuten 130 aufweisen, siehe Fig. 4. Diese ermöglichen es, in der Wandstärke des Klemmabschnitts 124 Raum für das Spannmittel 140 zu schaffen und gleichzeitig eine gute Verformbarkeit zu erzielen. Dies ist insbesondere von Vorteil, wenn das Spannmittel in Form von Schrauben 148 gestaltet ist, für welche insbesondere dann der Raumbedarf groß ist, wenn sie vollständig innerhalb der Mantelfläche des Klemmabschnitts 124 angeordnet sind. Kostengünstig in der Herstellung und vorteilhaft in Bezug auf exaktes Erreichen der benötigten Verformbarkeit ist die Weiterbildung der Nuten 130 derart, dass sie am Klemmabschnitt 124 in radialer Richtung außenliegend angeordnet sind. Vorteilhaft können die Nuten 130 in Umfangsrichtung auf halber Strecke zwischen den sich axial erstreckenden Schlitzen 112,112', 112" angeordnet sein. Bei Ausgestaltung des Spannmittels in Form von Schrauben 148 ist es vorteilhaft, die Nuten 130 mittig zwischen den Schrauben anzuordnen.

In Fig. 5 ist ein, wie in Fig. 3 dargestellt, auf Höhe der in Umfangsrichtung orientierten Schlitze 114 liegender Schnitt durch den Verbindungsabschnitt 106 entlang der Linie B-B gezeigt. Die Schlitze 114 können sichelartig gestaltet sein, beispielsweise durch Einsägen des Grundkörpers der Pumpenwelle 100. Gemäß der Grundform des Beispiels sind die axialen Schlitze 112 so angeordnet, dass die Sichel auf halbem Wege von Spitze zu Spitze geschnitten wird. In einer Weiterbildung sind die axialen Schlitze 112' so angeordnet, dass sie die sich in Umfangsrichtung erstreckenden Schlitze 110 und 114 auf weniger als der Hälfte deren Erstreckung in Umfangsrichtung schneiden. Dieses in Bezug auf den Schlitz 110 in Umfangsrichtung asymmetrische Schneiden ermöglicht es, die Verformbarkeit des Klemmabschnitts symmetrisch zu gestalten, auch wenn das Spannmittel 140 asymmetrisch ist, beispielsweise bei Verwendung von Gewindebohrung 142, Durchgangsbohrung 144, Aufnahmebohrung 146 und Schraube 148.

### Bezugszeichenliste

- 10: Pumpengehäuse
- 12: Ansaugeinlass
- 14: Traganordnung
- 16: Motorflansch
- 20: stationärer Gleitring
- 22: rotierender Gleitring
- 24: Feder
- 26: Dichtungsaufnahme
- 30: Motor
- 32: Motorwelle
- 40: Laufrad
- 42: Sicherungsmittel
- 100: Pumpenwelle
- 102: erster Abschnitt
- 104: zweiter Abschnitt
- 106: Verbindungsabschnitt
- 110: Schlitz in Umfangsrichtung
- 112: Schlitz in axialer Richtung
- 112': Schlitz in axialer Richtung
- 112": Schlitz in axialer Richtung
- 114: Schlitz in Umfangsrichtung
- 116: Stirnfläche
- 118: zylindrischer Hohlraum
- 120: Führungsabschnitt
- 122: zweiter Führungsabschnitt
- 124: Klemmabschnitt
- 124": Klemmabschnitt
- 126: zylindrische Führungsfläche
- 128: Klemmfläche
- 130: Nut
- 134: Gewinde
- 138: Öffnung
- 140: Spannmittel/Schraube
- 142: Gewindebohrung
- 144: Durchgangsbohrung
- 146: Aufnahmebohrung
- 148: Schraube
- 150: erstes Bauteil
- 152: zweites Bauteil
- 160: erstes Klemmabschnittsteil
- 162: zweites Klemmabschnittsteil
- 200: Wellenachse
- 202: Axiale Ausdehnung des Klemmabschnitts
- 204: Axiale Ausdehnung des Verbindungsabschnitts

## Patentansprüche

1. Pumpenwelle (100), welche einen mit einem Laufrad (40) einer Kreiselpumpe verbindbaren ersten Abschnitt (102), einen zum Zusammenwirken mit einer Dichtung ausgelegten, insbesondere zur Aufnahme eines Dichtringes (22) einer Gleitringdichtung geeigneten, zweiten Abschnitt (104) und einen Verbindungsabschnitt (106) aufweist, wobei der Verbindungsabschnitt (106) einen mit einer Stirnfläche (116) versehenen zylindrischen Hohlraum (118), in welchem eine Motorwelle (32) aufnehmbar ist, umfasst, und der Verbindungsabschnitt (106) wenigstens zwei sich vorwiegend in einer axialen Richtung erstreckenden Schlitze (112; 112'; 112") und wenigstens zwei sich vorwiegend in einer Umfangsrichtung erstreckenden, teilumfänglichen Schlitze (110) aufweist und der Verbindungsabschnitt (106) durch die sich in Umfangsrichtung erstreckenden Schlitze (110) in einen Führungsabschnitt (120) und zur Herstellung einer kraftschlüssigen Verbindung mit der Motorwelle (32) einen durch ein Spannmittel (140) in Umfangsrichtung und radialer Richtung elastisch verformbaren Klemmabschnitt (124) unterteilt wird, wobei der Verbindungsabschnitt (106) einen auf der in einer axialen Richtung dem Führungsabschnitt (120) abgewandten Seite des Klemmabschnittes (124; 124") angeordneten zweiten Führungsabschnitt (122) aufweist und zwischen zweitem Führungsabschnitt (122) und Klemmabschnitt (124) wenigstens zwei sich vorwiegend in Umfangsrichtung erstreckende, teilumfängliche Schlitze (114) vorgesehen sind und wobei der zweite Führungsabschnitt (122) ringförmig mit einer zylindrischen Innenfläche (126), mit welcher die Motorwelle (32) führbar ist, geformt ist, **dadurch gekennzeichnet, dass** der Klemmabschnitt (124; 124") wenigstens zwei sich in axialer Richtung über die volle axiale Länge (202) des Klemmabschnitts (124; 124") erstreckende Nuten (130) aufweist und die Nuten (130) am Klemmabschnitt (124; 124") in radialer Richtung außenliegend angeordnet sind.

2. Pumpenwelle nach Anspruch 1, **dadurch gekennzeichnet, dass** sich zweiter Führungsabschnitt (122) und Klemmabschnitt (124; 124") zusammen über weniger als eine halbe axiale Länge (204) des Verbindungsabschnitts (106) erstrecken.

3. Pumpenwelle nach Anspruch 1, **dadurch gekennzeichnet, dass** sich Führungsabschnitt (120) und Klemmabschnitt (124; 124") zusammen über weniger als eine halbe axiale Länge (204) des Verbindungsabschnitts (106) erstrecken.

4. Pumpenwelle nach einem der vorhergehenden Ansprüche, **dadurch gekennzeichnet, dass** sie ein erstes Bauteil (150), in welchem der zweite Abschnitt (104) angeordnet ist, und ein zweites Bauteil (152), in welchem der Verbindungsabschnitt (106) angeordnet ist, umfasst, und erstes und zweites Bauteil stoffschlüssig miteinander verbunden sind.

5. Pumpenwelle nach einem der vorhergehenden Ansprüche, **dadurch gekennzeichnet, dass** das Spannmittel (140) auf halber axialer Länge (202) des Klemmabschnitts (124; 124") angeordnet ist.

6. Pumpenwelle nach einem der vorhergehenden Ansprüche, **dadurch gekennzeichnet, dass** das Spannmittel (140) wenigstens zwei Schrauben (148) umfasst, von denen jeweils eine über ihre Schraubenlänge den Klemmabschnitt (124; 124") beidseits eines der axialen Schlitze (112; 112'; 112") durchsetzt.

7. Pumpenwelle nach einem der vorhergehenden Ansprüche, **dadurch gekennzeichnet, dass** die axiale Ausdehnung (202) des Klemmabschnitts (124; 124") weniger als ein Drittel der axialen Ausdehnung (204) des Verbindungsabschnitts (106) beträgt.

8. Pumpenwelle nach einem der vorhergehenden Ansprüche, **dadurch gekennzeichnet, dass** Verbindungsabschnitt (106) und Spannmittel (140) unwuchtfrei ausgeführt sind.

9. Pumpenwelle nach einem der vorhergehenden Ansprüche, **dadurch gekennzeichnet, dass** der Verbindungsabschnitt (106) und das Spannmittel (140) bezogen auf eine Mittelachse (200) der Pumpenwelle (100) drehsymmetrisch ausgeführt sind.

10. Pumpenwelle nach einem der vorhergehenden Ansprüche, **dadurch gekennzeichnet, dass** die axialen Schlitze (112; 112'; 112") die sich in Umfangsrichtung erstreckenden Schlitze (110, 114) auf weniger als der Hälfte der Erstreckung in Umfangsrichtung schneiden.

11. Kreiselpumpe mit einem Motor (30), welcher eine Motorwelle (32) umfasst, mit einem in einem Pumpengehäuse (10) angeordneten Laufrad (40) und einer zwischen Laufrad (40) und Motor (30) im Pumpengehäuse (10) angeordneten Gleitringdichtung (20; 22), wobei das Pumpengehäuse (10) mit dem Motor (30) verbunden ist, **dadurch gekennzeichnet, dass** die Kreiselpumpe eine Pumpenwelle (100) nach einem der vorhergehenden Ansprüche umfasst.

## Claims

1. A pump shaft (100), which has a first section (102), connectable to an impeller (40) of a rotary pump, a second section (104) adapted for cooperation with a seal, particularly suitable for receiving a sealing ring (22) of a mechanical seal, and a connecting section (106), wherein the connecting section (106) comprises a cylindrical cavity (118), provided with a front surface (116) and in which a motor shaft (32) can be accommodated, and the connecting section (106) has at least two slots (112; 112'; 112") extending mainly in an axial direction and at least two slots (110) extending mainly in a circumferential direction over a part of the circumference, and the connecting section (106) is divided by the slots (110) which extend in the circumferential direction into a guide section (120) and into a clamping section (124), elastically deformable in the circumferential direction and the radial direction by a tensioning device (140) for producing a force-locking connection to the motor shaft (32), wherein the connecting section (106) has a second guide section (122), disposed on a side of the clamping section (124; 124') facing away from the guide section (120) in an axial direction, and at least two slots (114) extending mainly in the circumferential direction over a part of the circumference are provided between the second guide section (122) and the clamping section (124), and wherein the second guide section (122) is in annular shape with a cylindrical inner surface (126) through which the motor shaft (32) can be guided, **characterised in that** the clamping section (124; 124') has at least two grooves (130) extending in the axial direction over the entire axial length (202) of the clamping section (124; 124'), and the grooves (130) are disposed externally on the clamping section (124; 124') in the radial direction.

2. The pump shaft according to claim 1, **characterised in that** the second guide section (122) and the clamping section (124; 124') together extend over less than half of the axial length (204) of the connecting section (106).

3. The pump shaft according to claim 1, **characterised in that** the guide section (120) and the clamping section (124; 124') together extend over less than half of the axial length (204) of the connecting section (106).

4. A pump shaft according to any one of the preceding claims, **characterised in that** it comprises a first component part (150), in which the second section (104) is disposed, and a second component part (152), in which the connecting section (106) is disposed, and that the first and the second component part are joined together by substance bonding.

5. A pump shaft according to any one of the preceding claims, **characterised in that** the tensioning device (140) is disposed on half the axial length (202) of the clamping section (124; 124').

6. A pump shaft according to any one of the preceding claims, **characterised in that** the tensioning device (140) comprises at least two screws (148), each of which penetrates the clamping section (124; 124') over its screw length on both sides of one of the axial slots (112; 112'; 112").

7. A pump shaft according to any one of the preceding claims, **characterised in that** the axial extension (202) of the clamping section (124; 124') is less than one third of the axial extension (204) of the connecting section (106).

8. A pump shaft according to any one of the preceding claims, **characterised in that** the connecting section (106) and the tensioning device (140) are made free of unbalance.

9. A pump shaft according to any one of the preceding claims, **characterised in that** the connecting section (106) and the tensioning device (140) are made torsionally symmetric with respect to a central axis (200) of the pump shaft (100).

10. A pump shaft according to any one of the preceding claims, **characterised in that** the axial slots (112; 112'; 112") intersect those slots (110, 114) which extend in the circumferential direction at less than half the extension in the circumferential direction.

11. A rotary pump with a motor (30), which comprises a motor shaft (32), with an impeller (40) arranged in a pump casing (10) and a mechanical seal (20, 22) arranged in the pump casing (10) between the impeller (40) and the motor (30), the pump casing (10) being connected to the motor (30), **characterised in that** the rotary pump comprises a pump shaft (100) according to any one of the preceding claims.

## Revendications

1. Arbre de pompe (100), qui a une première section (102), pouvant être raccordée à une roue à aubes (40) d'une pompe rotative, une deuxième section (104) conçue pour la interaction avec un joint d'étanchéité, notamment pour recevoir une bague d'étanchéité (22) d'une garniture mécanique, et une section de connexion (106), la section de connexion (106) comportant une cavité cylindrique (118), pourvue d'une face avant (116) et dans laquelle un arbre de moteur (32) peut être reçu, et la section de connexion (106) a au moins deux fentes (112; 112'; 112") s'étendant principalement dans une direction axiale et au moins deux fentes (110) s'étendant principalement dans une direction circonférentielle à travers une partie de la circonférence, la section de connexion (106) étant divisée par les fentes (110) qui s'étendent dans la direction circonférentielle en une section de guidage (120) et en une section de serrage (124) élastiquement déformable dans les directions circonférentielle radiale par un moyen de mise en tension (140) pour produire une liaison par friction à l'arbre de moteur (32), la section de connexion (106) ayant une deuxième section de guidage (122), disposée dans un coté de la section de serrage (124; 124') opposée à la section de guidage (120) dans une direction axiale, et au moins deux fentes (114) qui s'étendent principalement dans une direction circonférentielle à travers une partie de la circonférence étant pourvues entre la deuxième section de guidage (122) et la section de serrage (124), et la deuxième section de guidage (122) étant en forme annulaire avec une surface intérieure cylindrique (126) à travers laquelle l'arbre de moteur (32) peut être guidé, **caractérisé en ce que** la section de serrage (124; 124') a au moins deux fentes (130) s'étendant dans la direction axiale à travers la longueur axiale entière (202) de la section de serrage (124; 124'), et que les fentes (130) sont disposées sur l'extérieur de la section de serrage (124; 124') dans la direction radiale.

2. Arbre de pompe selon la revendication 1, **caractérisé en ce que** la deuxième section de guidage (122) et la section de serrage (124; 124') ensemble s'étendent à travers moins que la moitié de la longueur axiale (204) de la section de connexion (106).

3. Arbre de pompe selon la revendication 1, **caractérisé en ce que** la section de guidage (120) et la section de serrage (124; 124') ensemble s'étendent à travers moins que la moitié de la longueur axiale (204) de la section de connexion (106).

4. Arbre de pompe selon l'une quelconque des revendications précédentes, **caractérisé en ce qu'**il comporte un premier composant (150), dans lequel la deuxième section (104) est disposée, et un deuxième composant (152) dans lequel la section de connexion (106) est disposée, et que le premier et le deuxième composant sont reliés entre eux par liaison de matière.

5. Arbre de pompe selon l'une quelconque des revendications précédentes, **caractérisé en ce que** le moyen de mise en tension (140) est disposé sur la moitié de la longueur axiale (202) de la section de serrage (124; 124').

6. Arbre de pompe selon l'une quelconque des revendications précédentes, **caractérisé en ce que** le moyen de mise en tension (140) comporte au moins deux vis (148), dont chacune pénètre la section de serrage (124; 124') à travers sa longueur de vis sur les deux cotés d'une des fentes axiales (112; 112'; 112").

7. Arbre de pompe selon l'une quelconque des revendications précédentes, **caractérisé en ce que** l'extension axiale (202) de la section de serrage (124; 124') est moins qu'un troisième de l'extension axiale (204) de la section de connexion (106).

8. Arbre de pompe selon l'une quelconque des revendications précédentes, **caractérisé en ce que** la section de connexion (106) et le moyen de mise en tension (140) sont réalisés de manière équilibrée.

9. Arbre de pompe selon l'une quelconque des revendications précédentes, **caractérisé en ce que** la section de connexion (106) et le moyen de mise en tension (140) sont réalisés de manière roto symétrique autour d'un axe central (200) de l'arbre de pompe (100).

10. Arbre de pompe selon l'une quelconque des revendications précédentes, **caractérisé en ce que** les fentes axiales (112; 112'; 112") intersectent les fentes (110, 114) qui s'étendent dans la direction circonférentielle chez moins que la moitié de l'extension dans la direction circonférentielle.

11. Pompe rotative avec un moteur (30), qui comporte un arbre de moteur (32), avec une roue à aubes (40) arrangée dans un boîtier de pompe (10) et une garniture mécanique (20, 22) arrangée dans le boîtier de pompe (10) entre la roue à aubes (40) et le moteur (30), le boîtier de pompe (10) étant relié au moteur (30), **caractérisé en ce que** la pompe rotative comporte un arbre de pompe (100) selon l'une quelconque des revendications précédentes.
